# EUROPEAN PATENT APPLICATION

(11) **EP 4 434 802 A1**
(43) Date of publication of application: **25.09.2024**
(21) Application number: 24160760.5
(22) Date of filing: 01.03.2024
(51) Int. Cl.: B60L 50/71, B60L 50/72, B60L 1/00, B60L 58/33

(54) **FUEL CELL SYSTEMS WITH ENDURANCE BRAKING SUPPORT**

(30) Priority: 08.03.2023 EP 23160825; 30.10.2023 SE 2351237
(71) Applicant: VOLVO TRUCK CORPORATION, 405 08 Göteborg (SE)
(72) Inventor: ARYA, Pranav, 412 85 Göteborg (SE)
(74) Representative: Zacco Sweden AB

(57) **Abstract**

An integrated fuel cell, FC, module (220, 500), for an electrical system (300) in a heavy-duty vehicle (100), the module comprising a fuel cell stack (225), a compressor (221), a bleed valve (222), and an air-cooled brake resistor (240), where the bleed valve (222) is configured to divide an air flow from the compressor (221) into a first air flow and a second air flow, where the first air flow is fed to the fuel cell stack (225) and the second air flow is fed to the air-cooled brake resistor (240), where the fuel cell stack (225), the compressor (221), the bleed valve (222), and the air-cooled brake resistor (240) are enclosed in a common casing structure (510).

## Description

### TECHNICAL FIELD

This disclosure relates generally to fuel cell arrangements and fuel-cell powered vehicles. In particular aspects, the disclosure relates to fuel cell systems with endurance braking support and also to highly integrated fuel cell system modules enclosed in a common casing structure. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electrically powered vehicles are becoming more and more common. The electric machines on an electrically powered vehicle can be used for both propulsion and for braking, which is an advantage since at least some of the electrical energy spent on accelerating the vehicle may be recuperated during braking, resulting in an increased overall energy efficiency.

Automotive fuel cell systems (FCS) have been known for some time. A fuel cell produces electrical energy from hydrogen in an environmentally friendly manner, which is an advantage. A battery powered vehicle may employ an on-board FCS in order to convert hydrogen to electrical power, thereby extending the range of the electrically powered vehicle significantly.

Despite the progress made in the development of battery electric and fuel cell powered electric vehicles to-date, there is a need for improved methods for operating such vehicles.

### SUMMARY

According to a first aspect of the disclosure, there is presented an integrated fuel cell (FC) module for an electrical system in a heavy-duty vehicle. The module comprises a fuel cell stack, a compressor, a bleed valve, and an air-cooled brake resistor, where the bleed valve is configured to divide an air flow from the compressor into a first air flow and a second air flow, where the first air flow is arranged to be fed to the fuel cell stack and the second air flow is arranged to be fed to the air-cooled brake resistor. The first and second air flows are controllable in the sense that their relative magnitudes can be controlled by the FC module. The fuel cell stack, the compressor, the bleed valve, and the air-cooled brake resistor are all enclosed in a common casing structure in a highly integrated manner. By integrating the above-listed components in a common casing structure, along with other optional components, an integrally formed FC module is provided that is capable of both generating and dissipating energy. A heavy-duty battery electric vehicle carrying this FC module is provided with both energy generating capability to extend its range and endurance braking capability to allow braking for extended periods of time in a safe manner. The integrated fuel cell modules discussed herein thus seek to alleviate problems associated with endurance braking and limited range in heavy-duty battery electric vehicles. The integrated FC module normally also comprises a brake resistor control valve arranged between the bleed valve and the air-cooled brake resistor, which can be used to regulate a flow and pressure of air delivered from the compressor to the brake resistor. The integrated FC module is preferably controlled using a predictive control methodology which controls the various components of the FC module to dissipate energy at a level configured in dependence of an upcoming need for energy dissipation. The common casing structure of course also comprises some form of air intake, a hydrogen intake, water exhaust and a coolant media supply inlet and outlet, such as a cooling water interface.

The integrated FC module preferably comprises a two-way power interface configured for outputting generated electrical energy and for inputting electrical energy to be dissipated by the integrated fuel cell module. This means that the integrated FC module can be conveniently mounted in a heavy-duty vehicle, with a single power connection that provides both power generation and dissipation in a consolidated manner, i.e., the FC module can both output and absorb electrical energy over the same physical interface. This greatly simplifies media routing on heavy-duty vehicles, and also servicing of the vehicle electrical system.

According to some aspects the common casing structure comprises a rigid frame structure, such as a steel bar structure, with external brackets for supporting the integrated FC module on the heavy-duty vehicle. Several different optional brackets may be comprised in order to allow mounting of the fuel cell module onto different types of vehicles, having different form factors. The brackets may be arranged with resilient members such as rubber pads or steel springs that provide a de-vibration function to protect the components of the integrated FC module against strong vibration. The common casing structure optionally also comprises a housing which encloses the FC module, such as a plastic or sheet metal enclosure, which provides weather protection.

[The integrated FC module may furthermore comprise a controllable discharge backpressure valve and an expander module, where the controllable discharge backpressure valve is arranged between the fuel cell stack and the expander module. A control unit can then be used to control the controllable discharge backpressure valve to load the compressor in the FC module to draw a variable amount of power. _{[AP1]} The harder the compressor has to work to generate a given air flow _{[AP2]} and air pressure, the more power it draws, and thus the more power is also dissipated by the FC module. This operation by the compressor may be seen as a first energy dissipating operation of the FC module, which can be operated without actively using the brake resistor to dissipate energy. This is an advantage since the temperature of the brake resistor is then not increased, leaving a buffer to dissipate energy quickly should such energy dissipation become necessary with short notice. Maintaining a low temperature brake resistor is beneficial for the peak power dissipating capability of the FC module, since a low temperature brake resistor is normally able to dissipate high power for a shorter duration of time. At least some of the FC modules disclosed herein are configured to prioritize energy dissipation by the compressor over energy dissipation by the brake resistor, in order to maintain the energy and peak power dissipation buffer that a cool brake resistor represents. At least some of the FC modules disclosed herein are also configured to prioritize energy dissipation modes of operation where the fuel cell stack is left operational in idle mode over energy dissipation modes of operation where the fuel cell stack is turned off, since shutting down the fuel cell stack repeatedly often leads to an increased degradation on the fuel cell stack, which is undesired. It is an advantage of the techniques disclosed herein that fuel cell shut-down events are made less frequent.

The first energy dissipating operation of the FC module comprises increasing the air flow and the air pressure provided by the compressor. The entirety of this generated air flow is, however, not sent to the fuel cell stack. It is noted that the fuel cell stack requires a certain air flow at a certain pressure for running at idle load. Any deviation from this flow and pressure may cause damage to the fuel cell stack, e.g., by drying the stack out. The additional airflow from the compressor is diverted away from the fuel cell stack by the bleed valve towards the brake resistor. Note that the brake resistor is not actively used for dissipating energy in the first energy dissipating operation, although the additional air flow may be used to cool down a hot brake resistor.

According to some preferred aspects, the integrated FC module comprises a control unit that is arranged to receive a request for energy dissipation by the FC module. The control unit is arranged to determine:
- a first energy dissipation level of the FC module that is associated with an operating state where the fuel cell stack is operating in idle mode and the compressor is operating at full power, i.e., a preferred energy dissipating mode of the FC module, which does not raise the temperature of the brake resistor, and which may not be sufficient to support all forms of endurance braking. The first energy dissipation level can be determined, e.g., in terms of Joules/sec, or as a number on a fixed scale, from minimum energy dissipation to maximum energy dissipation.
- a second energy dissipation level of the FC module associated with an operating state where the fuel cell stack is operating in idle mode, the compressor is operating at full power, and the air-cooled brake resistor is operating at a level up to a maximum energy dissipating rate with the fuel cell stack in idle mode. This is an increased energy dissipation level compared to the first energy dissipation level since the brake resistor is now also used to dissipate electrical energy. The temperature of the brake resistor however now often rises, which is undesired, but may be necessary to support an ongoing or upcoming braking operation. The FC stack is still operated in idle mode though, i.e., not turned off, which is beneficial in terms of fuel stack wear and also since it allows to switch into a higher power energy production mode more quickly. The second energy dissipation level can be determined, e.g., in terms of Joules/sec, or as a number on a fixed scale, from minimum energy dissipation to maximum energy dissipation.
- a third energy dissipation level of the FC module associated with an operating state where the fuel cell stack is turned off, the compressor is operating at full power, and the air-cooled brake resistor is operating at a level up to a maximum energy dissipating rate with the fuel cell stack turned off. This is the highest energy dissipation level of the FC module. In this case the FC stack has been switched off to maximize energy dissipation capability in the FC module. The third energy dissipation level can be determined, e.g., in terms of Joules/sec, or as a number on a fixed scale, from minimum energy dissipation to maximum energy dissipation.
The control unit is in this case arranged to select between the first, second and third energy dissipating levels of the integrated FC module in dependence of the request for energy dissipation, and to control the fuel cell stack, the compressor, the bleed valve, and the air-cooled brake resistor according to the selected energy dissipating level. Thus, a predictive control is implemented where the energy dissipation level is selected based on a request for energy dissipation over an upcoming time period, such as a time period extending from a current time instant and up to a prediction horizon. The request for energy dissipation by the FC module may, e.g., comprise an average amount of energy to be dissipated by the FC module during a time period or distance range. The request for energy dissipation may also comprise instantaneous power to be dissipated, perhaps as function of time or travelled distance.

According to a second aspect of the disclosure, there is presented a computer-implemented method, performed by processing circuitry of a control unit associated with an FC system. The FC system may be the highly integrated FC module discussed above or a less integrated system where the brake resistor and possibly also some other components have been separated physically from each other on the vehicle, i.e., where all components are not enclosed in the same frame structure. The FC system comprises a fuel cell stack, a compressor, a bleed valve, and an air-cooled brake resistor. The method comprises obtaining a request for energy dissipation by the FC system, such as an average power to be dissipated over a time period up to a prediction horizon, or a maximum instantaneous power to be dissipated during an upcoming time period, or a trace of power as function of time and/or travelled distance to be dissipated. The method also comprises determining a first energy dissipation level of the FC system associated with an operating state where the fuel cell stack is operating in idle mode and the compressor is operating at full power, determining a second energy dissipation level of the FC system associated with an operating state where the fuel cell stack is operating in idle mode, the compressor is operating at full power, and the air-cooled brake resistor is used at maximum energy dissipating rate with the fuel cell stack in idle mode, and also determining a third energy dissipation level of the FC system associated with an operating state where the fuel cell stack is turned off, the compressor is operating at full power, and the air-cooled brake resistor is operating at maximum energy dissipating rate with the fuel cell stack turned off. The method furthermore comprises selecting between the first, second and third energy dissipating levels of the FC system in dependence of the request for energy dissipation, and controlling the fuel cell stack, the compressor, the bleed valve, and the air-cooled brake resistor according to the selected energy dissipating level. Thus, notably, a predictive control strategy is used to control the energy dissipation level of the FC system. Energy dissipation by the compressor only is preferred as long as this operation is sufficient to dissipate the required amount of energy over the upcoming time period up to the prediction horizon. The brake resistor is, however, used if needed, and the fuel cell stack is preemptively turned off if necessary to support an upcoming endurance braking operation. Fuel cell stack shut-down occurrences are minimized due to the degradation incurred by a shut-down event, which is an advantage. It is a further advantage of the methods proposed herein that the compressor is used as primary energy dissipator, and that it is strived for to keep the temperature of the brake resistor low, which means that the brake resistor acts as a buffer that can be used on-demand to dissipate intermittent high peak power or larger amounts of energy over shorter time periods.

According to aspects, the method comprises obtaining the request for energy dissipation as a request comprising an average power to be dissipated during a time period and/or comprising an instantaneous power to be dissipated during a time period.

According to aspects, the method comprises obtaining the request for energy dissipation as a request comprising an average power to be dissipated during a travelled [distance. _{[AP3]} The instantaneous brake power trace over the prediction horizon can also be sent as an input to the FC module, which can then perform averaging as desired. In this way, it is possible to have a smaller averaging window, which might be beneficial for FC module.

According to aspects, the method comprises configuring the fuel cell stack in idle mode in case the third energy dissipating level of the FC system is not selected, and shutting down the fuel cell stack in case the third energy dissipating level of the FC system is selected.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.
There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Figure 1 is an exemplary fuel-cell powered heavy-duty vehicle.
Figures 2-3 are schematic illustrations of example vehicle electrical systems and media routing _{[AP4]}.
Figures 4A-B are graphs illustrating example vehicle operations.
Figure 5 schematically illustrates an integrated fuel cell system module.
Figure 6 is a flow chart illustrating an example method.
Figure 7 is a flow chart illustrating another example method.
Figure 8 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

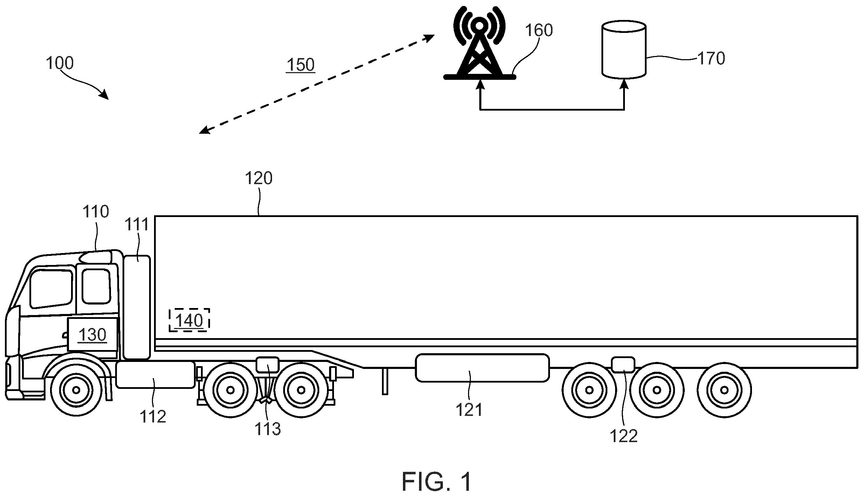

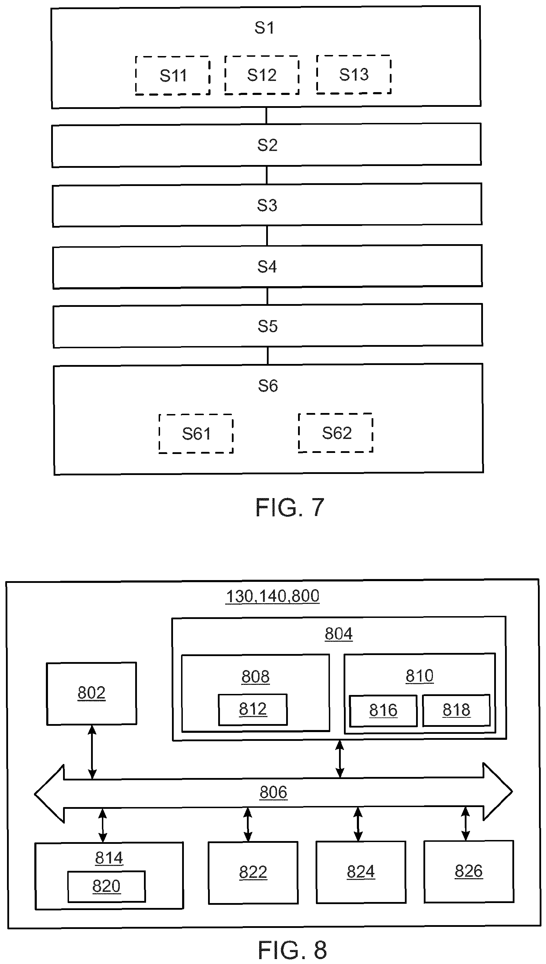

Figure 1 illustrates an example heavy-duty vehicle 100, here in the form of a truck comprising a tractor 110 and a trailer 120. The techniques disclosed herein are, however, generally applicable also in other types of vehicles, such as rigid trucks and also in some passenger cars and recreational vehicles. The vehicle 100 comprises a computer system 130, 140 which can be arranged in the truck and/or in the trailer. The computer system, or parts thereof, can also be arranged remote from the vehicle 100, on a server 170 or the like, which can be accessed from the vehicle 100 over wireless link 150 to a radio base station 160 or other type of wireless access point. The computer system 130, 140 may comprise a central processing unit, often referred to as an electronic control unit (ECU), or it can be distributed over several separated processing devices. An example computer system 800 will be discussed in more detail below in connection to Figure 8. It is, however, appreciated that other processing architectures can also be used with the same or at least similar technical effect.

A heavy-duty vehicle may be defined in some cases as a freight vehicle of more than 3.5 metric tons or as a passenger transport vehicles of more than 8 seats. A heavy-duty vehicle may also be defined as a vehicle with a frontal area that is larger than 45 square feet, which is about 4.18 square meters. The teachings herein are particularly suitable for use with semi-trailer type vehicles such as that shown in Figure 1 and rigid trucks, including rigid trucks with dollies and one or more trailers.

The vehicle 100 comprises an FCS 111 arranged to generate electrical power from hydrogen, stored in an on-board hydrogen tank, in a known manner. This electrical power can be used to power various actuators of the vehicle directly, such as electrical machines, power steering systems, electro-mechanical service brake systems, and so on. Parts or all of the electrical power generated by the FCS 111 can also be stored in an on-board energy storage system (ESS) 112 on the tractor 110 and/or in an ESS 121 arranged on the trailer 120. The most common type of ESS on road vehicles today are electrical battery systems. However, other forms of ESS can of course also be used, such as super-capacitor based electrical energy storage systems. The below text will mainly refer to battery systems, although it is appreciated that other forms of ESS may just as well be used.

The electric machine or machines on a battery powered vehicle can normally be used for both propulsion and for braking and may be arranged both on the tractor and on the trailer. Energy is consumed during propulsion, and at least partly regenerated during braking when travelling downhill. When going downhill with an electrically powered vehicle it is important that the State of Energy (SoE) of the batteries, often measured in Joules, is not too high at the onset of the downhill portion of road. If it is, the batteries may become fully charged before the end of the downhill portion of road, which means that they are no longer able to absorb energy from the electric machines. If no other way to dissipate energy from the electric machines is available, then the electric machines can no longer be used for braking. The operation of braking for extended periods of time and/or downhill distance is often referred to as endurance braking.

The service brakes, i.e., the friction brakes arranged on the tractor and on the trailer can be used to brake the vehicle in case the SoE of the vehicle ESS is too high to allow braking by the electric machines. However, service brake systems comprising friction brakes such as disc brakes or drum brakes risk malfunction if used for extended periods of time, a condition sometimes referred to as brake fading. Thus, it is appreciated that heavy-duty vehicles, such as semi-trailers and other heavy trucks, are normally in need of some form of endurance braking function, since they are too heavy to brake down extended downhill sections of road using only friction brakes.

Some vehicles comprise energy dissipating devices 113, 122, such as brake resistors, that can be used to dissipate surplus electrical energy. However, the energy dissipating capacity of such energy dissipating devices is limited. A brake resistor for instance is limited in its energy dissipating capability by its temperature, which increases during energy dissipation. Some brake resistors, such as water-cooled and air-cooled brae resistors, comprise active cooling systems. The cooling capacity of such cooling systems then also has an impact on the energy dissipating capacity of the brake resistor.

It has been realized that an FCS can be used to dissipate energy generated during extended periods of braking by using the compressor system of the fuel cell system in an energy inefficient manner. EP4242039A1 described one example of how a fuel cell system can be used to dissipate surplus energy in a heavy-duty vehicle.

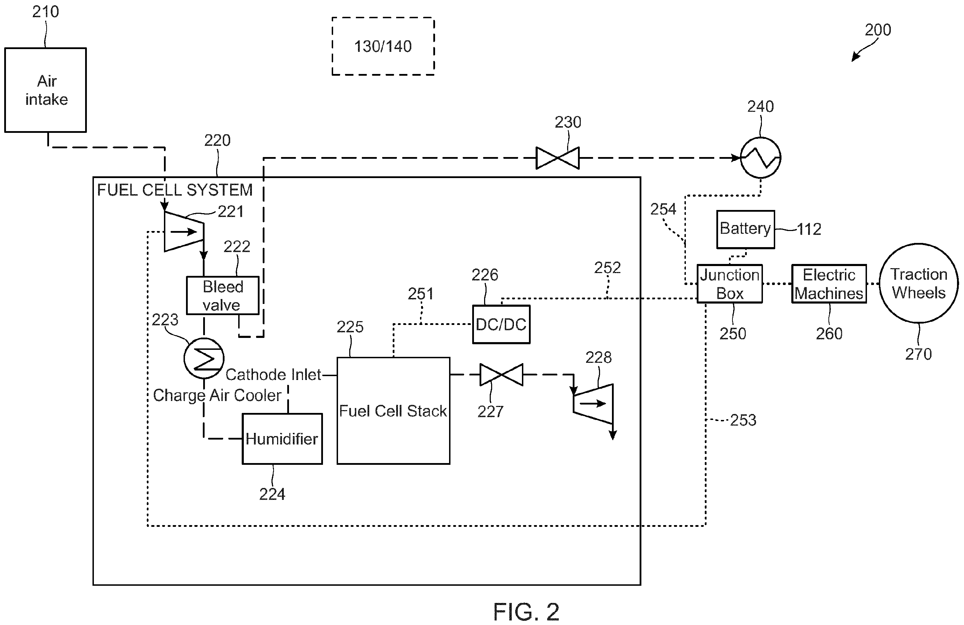

Figure 2 illustrates parts of an example vehicle electrical system _{[AP5]} 200 that comprises an FCS 220. The FCS 220 can be placed in an idle mode of operation where a reduced amount of power is generated, and in an active mode of operation where a higher amount of power is generated. Most FC stacks can be configured to generate a variable amount of power, from a minimum power level (often referred to as the idle mode of the FC stack) _{[AP6]} to a maximum power level. FC stacks and FC systems are generally known, at least from EP4242039A1, and their basic operations will therefore not be discussed in more detail herein. The FCS 220 provides electrical power to recharge a battery 112 and/or to power one or more electric machines 260 that drive traction wheels 270 on the vehicle 100. In this example the electrical power is distributed by a junction box 250. The components of the FCS are controlled by some type of control unit 130, 140. The control of the FCS can be performed by a central vehicle controller, or by a local vehicle controller which is dedicated to the FCS.

The FCS 220 draws air from the ambient environment of the vehicle 100 via an air filter 210 or more generally via some form of air intake. The air from the air filter 210 passes via a compressor 221 which generates an operating air pressure that the FCS 220 requires to function. The air flow from the compressor 221 is in this example fed to a bleed valve 222 from which a first controllable amount of air can be passed to the brake resistor control valve 230 and onwards to an air-cooled brake resistor 240 in order to cool down the resistor. Some type of thermal expansion arrangement can be used to bring down the temperature of the air flow to the air-cooled resistor 240 A second controllable amount of air is forwarded to a charge air cooler 223, via a humidifier 224, before it reaches the cathode inlet of the fuel cell stack 225. An exhaust air flow from the fuel cell stack 225 goes via a discharge backpressure valve 227, from which a third controllable amount of air is passed to an expander 228.

The resistor control valve 230 and the discharge backpressure valve 227 are controlled by the control unit 130, 140 to regulate the resistance to the first and second controllable amounts of air. The higher the backpressure the harder the compressor 221 has to work to generate a given flow of air. Thus, the compressor 221 together with the valves 222, 227 and 227 can be used to dissipate energy in a controlled manner. This energy dissipation is not dependent on the air-cooled brake resistor per se since the energy is consumed by the compressor 221 as it operates. It is appreciated that the control unit 130, 140 may comprise processing devices dedicated to FC system control.

The electrical power 251 that is generated by the fuel cell stack 225 during operation is fed to a DC/DC module (direct current to direct current transformer) before being output from the FCS 220 as a main electrical power output 252 of the FCS 220. In this particular example the main electrical power output 252 goes to the junction box 250 of the vehicle electrical system 200.

The vehicle electrical system 200 is configured for energy dissipation of surplus energy, such as energy that cannot be absorbed by the battery 112 during regenerative braking, and/or electrical power from the FCS 220 which cannot be absorbed by the battery 112.

As a first means of energy dissipation, a connection 254 is arranged between the junction box 250 and the air-cooled brake resistor 240. As a second means for energy dissipation, a power line 253 connects the junction box 250 and the compressor 221 in the FCS 220. The compressor 221 is of course also used during normal FCS operation but can also be used at high power when the FCS 220 is shut off or when the FCS 220 is idling, in which case the bleed valve 222 can be used to maintain the desired internal air pressure in the fuel cell stack 225.

A mode of operation where the compressor 221 is used as prime energy dissipation means, where the brake resistor 240 is not used to dissipate a significant amount of energy, for instance because it is desired to maintain a low temperature of the brake resistor, will be referred to herein as the first FCS energy dissipating level. A mode of operation where the brake resistor is used to dissipate its maximum amount of energy, i.e., where the valve 230 is fully open, will be referred to herein as the second FCS energy dissipating level. Note that the FC stack 225 is not turned off in any of the first and second energy dissipation levels, meaning that some energy is still generated by the FC stack. A third energy dissipation level of the system is when the FC stack is turned off. When the FC stack 225 is turned off, no energy is generated, and the compressor and valve arrangement can be used for maximum energy dissipation.

The actual energies expected to be dissipated by the FCS given different control commands can be determined by practical experimentation under different conditions, and/or by computer simulation. Each vehicle, or each fuel cell system module, may store expected energy dissipation levels in a memory to be used in run-time to control the operations of, e.g., the valves 222, 227, 230, and the compressor 221 of the fuel cell system.

The energy dissipation levels can also be monitored in real time as the fuel cell system is used, e.g., during endurance braking events. The data thus obtained can be used to refine the stored data. For instance, weather conditions such as ambient temperature can be stored together with a value indicative of dissipated energy for a given control setting of the fuel cell system. This stored value can then be used when the energy dissipation levels are determined the next and following times energy dissipation by the fuel cell system is desired.

Energy dissipating data can also be shared among different vehicles, e.g., using the wireless link 150 and the server 170 discussed above in connection to Figure 1. Thus, according to some aspects of the present disclosure a vehicle control unit 130, 140 receives data indicative of an expected amount of energy that can be dissipated by an on-board fuel cell system given different modes of operation and also different operating conditions such as ambient temperature.

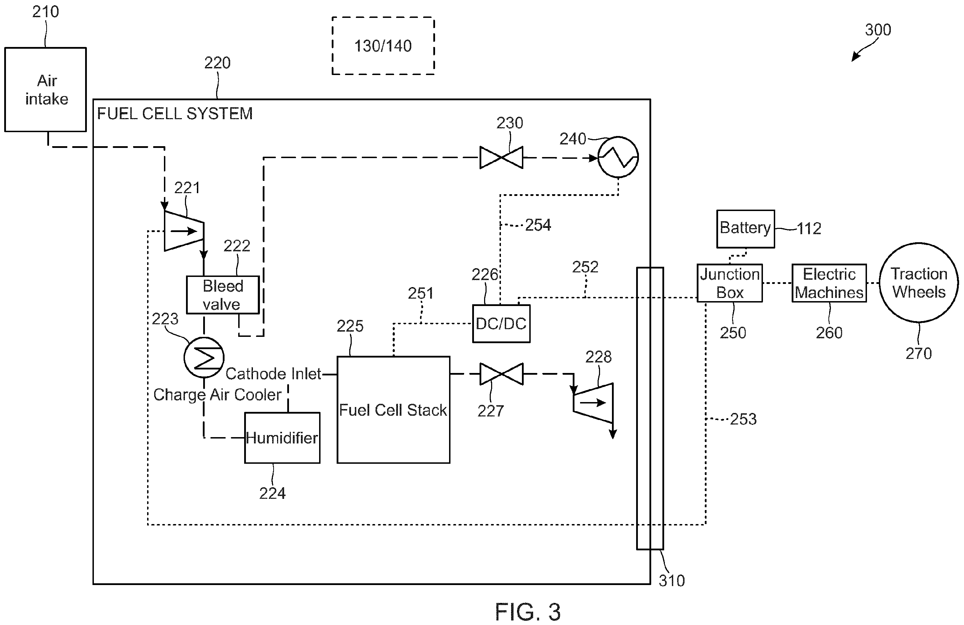

Figure 3 schematically illustrates parts of another example vehicle electrical system 300. This system essentially comprises the same components as the example vehicle electrical system 200 discussed above in connection to Figure 2, but here the brake resistor 240 and the brake resistor control valve 230 have both been integrated in the FCS 220 to make an integrated FC module, such as a module comprised in a common casing structure. The common casing structure may, e.g., be a steel frame or a common external housing that encloses the components of the FC module. The FCS illustrated in Figure 3 comprises an air intake for drawing air into the fuel cell stack 225 and also for cooling a brake resistor and/or for dissipating energy by operating the compressor to provide higher output airflow and higher output air pressure than needed for operation of the fuel cell stack 225. This FCS 220 also comprises a single joint electrical interface 310 towards the junction box 250. The electrical connection 254 to the air-cooled brake resistor 240 in this case passes via the DC/DC module 226.

The various vehicle electrical systems 200, 300 discussed herein enables the dissipation of energy during long braking events, i.e., endurance braking operations. This is achieved primarily by addition of the control valves 222, 230 and 227 in combination with an air-cooled brake resistor 240 and predictive control of the components in the FC system. The brake resistor 240 can be part of the fuel cell system assembly as in the example electrical system 300 or separate as in the electrical system 200, where an air flow is routed from the fuel cell system compressor 221 to the brake resistor 240. Valve 222 is a flow divertor valve, referred to herein as a bleed valve, which can distribute the flow of air from the compressor 221 over two different paths, as illustrated in Figure 2 and in Figure 3. The flow distribution can be varied continuously by the control unit 130, 140. Valve 230 and valve 227 can be seen as configurable throttle valves that are used for controlling the pressure drop or back-pressure for the compressor to adjust operating according to current operating conditions of the FCS 220.

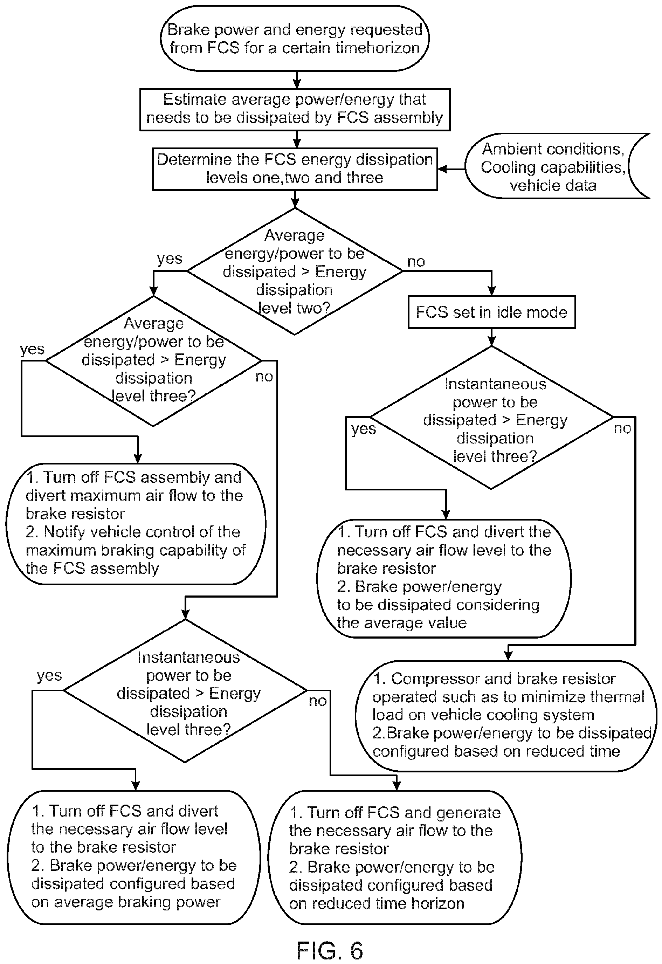

According to a method for controlling the vehicle electrical systems disclosed herein, which will be discussed in more detail below in connection to Figure 6 and Figure 7, the brake power and/or energy to be dissipated by the FCS over an upcoming time period of road distance is first obtained, e.g., as a request from a vehicle control system 130, 140 for a certain prediction horizon. The following three parameters listed below are also determined, periodically, preemptively, or on demand as the request for energy dissipation is obtained. The determined values can be stored in a memory on the vehicle or in the FCS 220, e.g., as a look up table. The parameters below are optionally determined in dependence of the ambient conditions of the vehicle, such as outside temperature. As mentioned above the parameters can also be at least in part received from other vehicles having similar set-ups.
1. Maximum power consumption of the compressor 221: This power consumption represents an energy dissipation level that will depend on the thermal load of the vehicle and how much the vehicle cooling system can cool the electric machine of the compressor; at high ambient temperatures it is possible that the maximum power consumption of the compressor 221 will be limited due to limited cooling capabilities of the vehicle. The maximum power consumption of the compressor 221 can be determined from practical experimentation, by computer simulation, and/or over time during operation of the FC system.
2. Maximum power dissipation by the air-cooled brake resistor 240 when the FCS 220 is turned on: This will be a function of ambient temperature as hot air can cool the resistor less therefore reducing the braking capacity. Also, the maximum power consumption of the compressor 221 will define the maximum air flow that the compressor can provide, thereby defining the maximum cooling effect that is possible to achieve for the air-cooled brake resistor 240 and thus also the maximum power dissipation possible to achieve using the air-cooled brake resistor 240.
3. Maximum power dissipation from the air-cooled brake resistor 240 when FCS is turned off, i.e., when the compressor 221 and the bleed valve 222 are used solely to cool the brake resistor. In this case the air flow to the brake resistor can be increased since the fuel cell stack is not active and thus not in need of any air flow. Valve 222 is switched to a position where the entire air flow is directed to the air-cooled brake resistor 240. The maximum power dissipation by the air-cooled brake resistor 240, with or without an active FCS, can be determined from practical experimentation, by computer simulation, and/or over time during operation of the FC system.

The methods disclosed herein also comprise calculating a number of FCS energy dissipating levels that depend at least in part on the hardware (HW) sizing strategy. Three levels can, for instance, be calculated as follows (Positive term in a summation here means generated power and negative term in a summation means dissipated power):

Energy dissipating level one: Idle power of FCS - maximum power consumption of the compressor 221.

Energy dissipating level two: Idle power of FCS - maximum power consumption of compressor - maximum power dissipation from the brake resistor when the FCS is operating in idle mode.

Energy dissipating level three: zero (FCS turned off) - maximum power consumption of compressor - maximum power dissipation from the brake resistor when the FCS is turned off.

It is appreciated that the battery system of the vehicle can also be used to absorb energy. Such energy absorption capability of the vehicle is considered implicitly comprised in the different determinations and energy dissipation capabilities discussed herein.

The exact energy dissipating levels (measured, e.g., in Joules/sec) will depend on the hardware characteristic and HW sizing of the overall vehicle electrical system, and in particular the hardware and sizing of the FCS 220. For example, if the brake resistor 240 is large and needs a lot of air flow to cool down and the compressor is sized exactly to provide this airflow, then the first energy dissipating level might be very small in comparison to the second energy dissipating level. However, if the brake resistor 240 is not so large and the compressor is oversized in relation to the specification of the fuel cell stack 225, then the first energy dissipating level may be similar to the addition involved in the second energy dissipating level, i.e., the contribution from adding the brake resistor when the fuel cell stack is in idle mode.

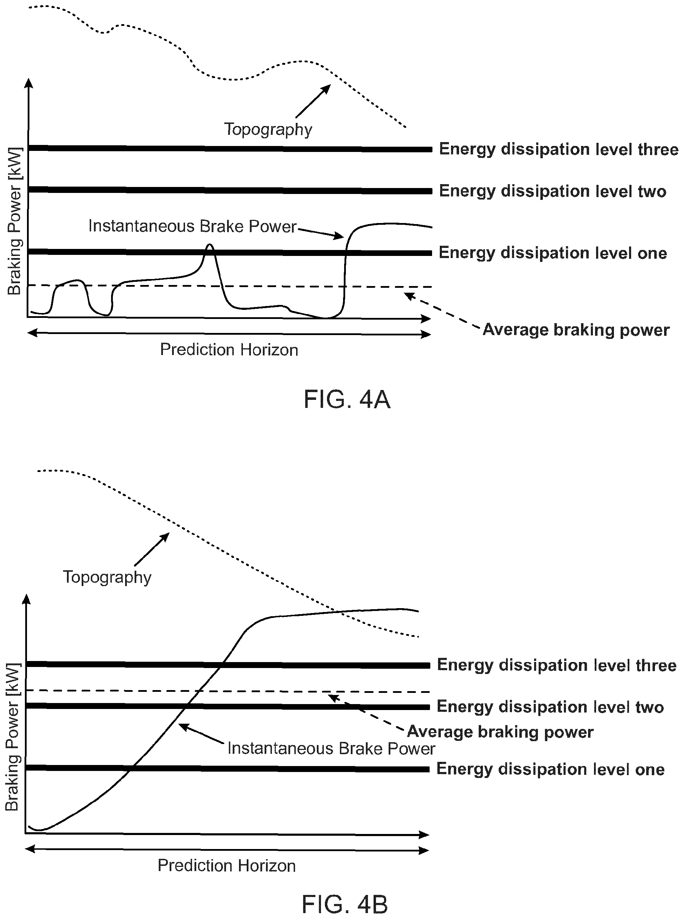

Figure 4A and Figure 4B show two graphs illustrating examples of how the control schemes disclosed herein can be used to optimize the braking performance of a vehicle 100.

In the example of Figure 4A the average braking power required to traverse the topography during the prediction horizon is below the first energy dissipating level, i.e., the energy dissipation can be handled solely by the compressor 221 without assistance from the braking resistor. In this case the compressor 221 and the brake resistor 240 are operated such as to minimize the thermal load imposed on the cooling system of the vehicle 100 while providing sufficient energy dissipation to support the endurance braking operation. The brake power/energy to be dissipated can be configured based on a shorter horizon or even based on instantaneous brake power. Now here, the compressor and brake resistor can be controlled in two ways; either to dissipate the average power over the complete horizon or dissipate the instantaneous power. The selection can be made based on the inertia of the compressor and on the energy dissipating capability of the brake resistor. If the compressor and brake resistor are fast to be controlled; it is beneficial to follow the instantaneous brake power since this will minimize the throughput from the battery. However, if the compressor and brake resistor are slow to be controlled; then following the average power is more beneficial. Furthermore, depending on the dynamics of the compressor and brake resistor, it is also possible to consider averaging over a smaller horizon, to achieve the best performance.

The plot in Figure 4B is an example of where the use of average power dissipation is preferred, otherwise the system will not be able to achieve the braking performance required by the fuel cell system. Here, the instantaneous performance required by the vehicle is higher than what the three braking energy dissipating level together can provide. So, in the earlier part of the prediction horizon, the fuel cell system will dissipate more energy than the instantaneous brake power so as to compensate for the later part of the time period leading up to the prediction horizon.

This logic can be extended also to if the average power was lower than the second energy dissipating level; the fuel cell system would not need to be turned off thereby reducing the number of start stops event of the fuel cell system and minimizing the degradation. It is generally an advantage that the methods disclosed herein lead to fewer fuel cell stack shut-off events.

It is appreciated that the size of the different energy dissipating levels can be different. It is also conceivable that depending on the different energy dissipating level sizes, the execution of different steps can be in different order. Furthermore, the decision of which step or combinations of steps to execute is based on optimizing the performance of the complete vehicle. For example, it is possible to combine energy dissipating level one and energy dissipating level two in a way such as running compressor at mid load and also using the air-cooled brake resistor to dissipate remaining energy if that helps with the overall cooling situation of the vehicle.

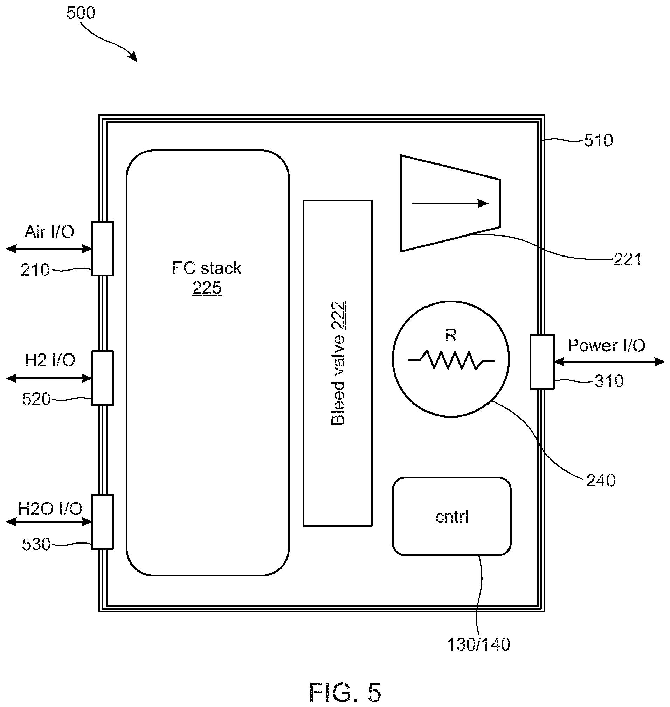

To summarize, with reference also to Figure 5, there is disclosed herein an integrated FC module 220, 500, for an electrical system 300 in a heavy-duty vehicle 100. The module comprises a fuel cell stack 225, a compressor 221, a bleed valve 222, and an air-cooled brake resistor 240. _{[AP7]} It is appreciated that the FC module 500 is only schematically illustrated and there are additional components comprised in the module which are not shown in Figure 5. It is, for instance, likely that there is a humidifier, water intercooler, and so on. The bleed valve 222, or flow diverter valve, is configured to divide an air flow generated by the compressor 221 into a first air flow and a second air flow, where the first air flow is fed to the fuel cell stack 225 and the second air flow is fed to the air-cooled brake resistor 240. The fuel cell stack 225, the compressor 221, the bleed valve 222, and the air-cooled brake resistor 240 are enclosed in a common casing structure 510. This means that the whole set-up is integrally formed and can be mounted as a single piece. The common casing structure 510 has a two-way power interface 310 configured for outputting generated electrical energy and for inputting electrical energy to be dissipated by the integrated fuel cell module. Thus, the FC module can be used both to generate electrical energy and to dissipate surplus electrical energy, which is an advantage. All the components necessary to generate electrical energy and all the components necessary to dissipate electrical energy are comprised in the same common casing structure, which means that a single module is all that is needed to increase range of a battery electric heavy-duty vehicle 100, and at the same time provide reliable endurance braking capability. The common casing structure 510 preferably comprises a rigid frame structure, such as a steel structure, with brackets for supporting the integrated FC module on the heavy-duty vehicle 100. This way the FC module is easy to install and can be verified separately from the vehicle 100 prior to installation in the vehicle 100 at the assembly line in the factory. Several different mounting options can be built into the common casing structure 510, such that the same FC module can be fitted onto different vehicle types having different form factors and chassis geometries. The common casing structure 510 may also comprise a body or housing, such as metal or plastic plates which cover the FC module and provides protection from the external environment.

According to some aspects the FC module 500 also comprises an air interface for providing air intake 210, and optionally also an air exhaust for ejecting spent and surplus air and generated water from the FC module 500 when the FC stack 225 is active.

The FC module 500 may of course also comprise an interface for hydrogen 520, including a return line for unspent hydrogen, and a water interface 530 for providing and returning cooling water _{[AP8]} to the FC module 500.

It is noted that the FC module 500 can be mounted onto a tractor vehicle 110 or onto a trailer vehicle 120.

The integrated FC module 220, 500 may furthermore comprise a controllable discharge valve 227 and an expander module 228 as discussed above, where the controllable discharge valve 227 is arranged between the fuel cell stack 225 and the expander module 228. This controllable discharge valve 227 can be used to regulate backpressure to the compressor 221, such that it can consume more or less power.

The integrated FC module 220, 500 optionally also comprises a brake resistor control valve 230 arranged between the bleed valve 222 and the air-cooled brake resistor 240, to regulate a flow and pressure of air to the air-cooled brake resistor 240.

A control unit 130, 140 can be arranged to receive a request for energy dissipation by the FC module. The control unit is in this case arranged to determine: a first energy dissipation level of the FC module associated with an operating state where the fuel cell stack 225 is operating in idle mode and the compressor 221 is operating at full power, a second energy dissipation level of the FC module associated with an operating state where the fuel cell stack 225 is operating in idle mode, the compressor 221 is operating at full power, and the air-cooled brake resistor 240 is operating at maximum energy dissipating rate with the fuel cell stack in idle mode, and a third energy dissipation level of the FC module associated with an operating state where the fuel cell stack 225 is turned off, the compressor 221 is operating at full power, and the air-cooled brake resistor 240 is operating at maximum energy dissipating rate with the fuel cell stack turned off. The control unit 130 can furthermore be arranged to select between the first, second and third energy dissipating levels of the integrated FC module 220, 500 in dependence of the request for energy dissipation, and to control the fuel cell stack 225, the compressor 221, the bleed valve 222, and the air-cooled brake resistor 240 according to the selected energy dissipating level.

According to some aspects, the request for energy dissipation by the FC module comprises an average amount of energy to be dissipated by the FC module during a time period or distance range. _{[AP9]}

Figure 6 shows the control scheme and different steps to achieve the optimum braking performance using the fuel cell systems disclosed herein. The distinction between the instantaneous and the average power to be dissipated is crucial for this control scheme. Some of the obtained advantages assume that even though it might not be possible to achieve sufficient instantaneous energy dissipation to support full braking power, it is feasible to achieve an averaged performance over a certain prediction horizon. Furthermore, the use of average power can allow to run the fuel cell system in a smoother way avoiding too many transients with the valves 222, 227, 230. Using the average power can also aid in minimizing the number of shutdowns that are need for the fuel cell system thus reducing the degradation of the system due to recurrent fuel cell shutdowns.

The control method can be implemented using both lower and higher number of Energy dissipating levels. For example, if Energy dissipating level two is not possible to activate due to availability of the brake resistor (either a failure in HW or HW not present in vehicle), it is still feasible to use the control method only with Energy dissipating level one and Energy dissipating level three where level three is fuel cell stack turned off and the compressor running at full power. A higher number of Energy dissipating levels can be achieved by adding more flow diverter valves and further HW for energy recuperation/dissipation.

The horizon length for the brake power estimation from the fuel cell can be 2km, 5km, 10km or even longer. It is also conceivable that the averaging of the brake power/energy can be done for the complete prediction horizon or can be further broken down to smaller levels such as 500m or lower to optimize the complete vehicle performance while balancing the transient performance of the FCS.

Figure 7 is a flow chart that illustrates a computer-implemented method which summarizes some of the key concepts discussed herein. The method may be performed by processing circuitry of a control unit 130, 140, 800 associated with an FC system 220, 500 such as the FC module discussed above in connection to Figure 5. The fuel cell system generally comprises a fuel cell stack 225, a compressor 221, a bleed valve 222, and an air-cooled brake resistor 240. The method comprises:
obtaining S1 a request for energy dissipation by the FC system 220, 500,
determining S2 a first energy dissipation level of the FC system associated with an operating state where the fuel cell stack 225 is operating in idle mode and the compressor 221 is operating at full power,
determining S3 a second energy dissipation level of the FC system associated with an operating state where the fuel cell stack 225 is operating in idle mode, the compressor 221 is operating at full power, and the air-cooled brake resistor 240 is operating at maximum energy dissipating rate with the fuel cell stack in idle mode, and
determining S4 a third energy dissipation level of the FC system associated with an operating state where the fuel cell stack 225 is turned off, the compressor 221 is operating at full power,
and the air-cooled brake resistor 240 is operating at maximum energy dissipating rate with the fuel cell stack turned off,
The method also comprises selecting S5 between the first, second and third energy dissipating levels of the FC system in dependence of the request for energy dissipation, and controlling S6 the fuel cell stack 225, the compressor 221, the bleed valve 222, and the air-cooled brake resistor 240 according to the selected energy dissipating level.

According to some aspects the method comprises obtaining S11 the request for energy dissipation as a request comprising an average power to be dissipated during a time period.

According to some aspects the method comprises obtaining S12 the request for energy dissipation as a request comprising an average power to be dissipated during a travelled distance. _{[AP10]}

According to some aspects the method comprises obtaining S13 the request for energy dissipation as a request comprising an instantaneous power to be dissipated during a travelled distance ._{[AP11]}

According to some aspects the method comprises configuring the fuel cell stack 225 in idle mode S61 in case the third energy dissipating level of the FC system is not selected and shutting down S62 the fuel cell stack 225 in case the third energy dissipating level of the FC system is selected.

figure 8] _{[AP12]} is a schematic diagram of a computer system 800 for implementing examples disclosed herein. The computer system 800 is adapted to execute instructions from a computer-readable medium to perform these and/or any of the functions or processing described herein. The computer system 800 may be connected (e.g., networked) to other machines in a LAN, an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include processing circuitry 802 (e.g., processing circuitry including one or more processor devices or control units), a memory 804, and a system bus 806. The computer system 800 may include at least one computing device having the processing circuitry 802. The system bus 806 provides an interface for system components including, but not limited to, the memory 804 and the processing circuitry 802. The processing circuitry 802 may include any number of hardware components for conducting data or signal processing or for executing computer code stored in memory 804. The processing circuitry 802 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 802 may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processing circuitry 802 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures, and which can be accessed by a computer or other machine with processing circuitry 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program 820 stored on a transitory or non-transitory computer-usable or computer-readable storage medium (e.g., single medium or multiple media), such as the storage device 814, which includes complex programming instructions (e.g., complex computer-readable program code) to cause the processing circuitry 802 to carry out actions described herein. Thus, the computer-readable program code of the computer program 820 can comprise software instructions for implementing the functionality of the examples described herein when executed by the processing circuitry 802. In some examples, the storage device 814 may be a computer program product (e.g., readable storage medium) storing the computer program 820 thereon, where at least a portion of a computer program 820 may be loadable (e.g., into a processor) for implementing the functionality of the examples described herein when executed by the processing circuitry 802. The processing circuitry 802 may serve as a controller or control system for the computer system 800 that is to implement the functionality described herein.

The computer system 800 may include an input device interface 822 configured to receive input and selections to be communicated to the computer system 800 when executing instructions, such as from a keyboard, mouse, touch-sensitive surface, etc. Such input devices may be connected to the processing circuitry 802 through the input device interface 822 coupled to the system bus 806 but can be connected through other interfaces, such as a parallel port, an Institute of Electrical and Electronic Engineers (IEEE) 1394 serial port, a Universal Serial Bus (USB) port, an IR interface, and the like. The computer system 800 may include an output device interface 824 configured to forward output, such as to a display, a video display unit (e.g., a liquid crystal display (LCD) or a cathode ray tube (CRT)). The computer system 800 may include a communications interface 826 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An integrated fuel cell, FC, module (220, 500), for an electrical system (300) _{[AP13]} in a heavy-duty vehicle (100), the module comprising
a fuel cell stack (225), a compressor (221), a bleed valve (222), and an air-cooled brake resistor (240),
where the bleed valve (222) is configured to divide an air flow from the compressor (221) into a first air flow and a second air flow, where the first air flow is fed to the fuel cell stack (225) and the second air flow is fed to the air-cooled brake resistor (240),
where the fuel cell stack (225), the compressor (221), the bleed valve (222), and the air-cooled brake resistor (240) are enclosed in a common casing structure (510).

2. The integrated FC module (220, 500) according to claim 1, comprising a two-way power interface (310) configured for outputting generated electrical energy and for inputting electrical energy to be dissipated by the integrated fuel cell module.

3. The integrated FC module (220, 500) according to claim 1 or 2, where the common casing structure (510) comprises a rigid frame structure with brackets for supporting the integrated FC module on the heavy-duty vehicle (100).

4. The integrated FC module (220, 500) according to any previous claim, where the common casing structure (510) comprises a housing.

5. The integrated FC module (220, 500) according to any previous claim, where the common casing structure (510) comprises an air intake (210), a hydrogen intake (520), and a cooling water interface (530). _{[AP14]}

6. The integrated FC module (220, 500) according to any previous claim, comprising a controllable discharge backpressure valve (227) and an expander module (228), where the controllable discharge backpressure valve (227) is arranged between the fuel cell stack (225) and the expander module (228).

7. The integrated FC module (220, 500) according to any previous claim, comprising a brake resistor control valve (230) arranged between the bleed valve (222) and the air-cooled brake resistor (240).

8. The integrated FC module (220, 500) according to any previous claim, comprising a control unit (130, 140, 800) arranged to receive a request for energy dissipation by the FC module, where the control unit (130, 140, 800) is arranged to determine:
a first energy dissipation level of the FC module associated with an operating state where the fuel cell stack (225) is operating in idle mode and the compressor (221) is operating at full power,
a second energy dissipation level of the FC module associated with an operating state where the fuel cell stack (225) is operating in idle mode, the compressor (221) is operating at full power, and the air-cooled brake resistor (240) is operating at maximum energy dissipating rate with the fuel cell stack in idle mode, and
a third energy dissipation level of the FC module associated with an operating state where the fuel cell stack (225) is turned off, the compressor (221) is operating at full power, and the air-cooled brake resistor (240) is operating at maximum energy dissipating rate with the fuel cell stack turned off,
where the control unit (130, 140, 800) is arranged to select between the first, second and third energy dissipating levels of the integrated FC module (220, 500) in dependence of the request for energy dissipation, and to control the fuel cell stack (225), the compressor (221), the bleed valve (222), and the air-cooled brake resistor (240) according to the selected energy dissipating level.

9. The integrated FC module (220, 500) according to claim 8, where the request for energy dissipation by the FC module comprises an average amount of energy to be dissipated by the FC module during a time period or distance range and/or an instantaneous amount of energy to be dissipated by the FC module during a time period or distance range. _{[AP15]}

10. A heavy-duty vehicle (100) comprising an integrated FC module (220, 500) according to any previous claim. _{[AP16]}

11. A computer-implemented method, performed by processing circuitry of a control unit (130, 140, 800) associated with a fuel cell, FC, system (220, 500) comprising a fuel cell stack (225), a compressor (221), a bleed valve (222), and an air-cooled brake resistor (240), the method comprising
obtaining (S 1) a request for energy dissipation by the FC system (220, 500),
determining (S2) a first energy dissipation level of the FC system associated with an operating state where the fuel cell stack (225) is operating in idle mode and the compressor (221) is operating at full power,
determining (S3) a second energy dissipation level of the FC system associated with an operating state where the fuel cell stack (225) is operating in idle mode, the compressor (221) is operating at full power, and the air-cooled brake resistor (240) is operating at maximum energy dissipating rate with the fuel cell stack in idle mode, and
determining (S4) a third energy dissipation level of the FC system associated with an operating state where the fuel cell stack (225) is turned off, the compressor (221) is operating at full power, and the air-cooled brake resistor (240) is operating at maximum energy dissipating rate with the fuel cell stack turned off,
selecting (S5) between the first, second and third energy dissipating levels of the FC system in dependence of the request for energy dissipation, and
controlling (S6) the fuel cell stack (225), the compressor (221), the bleed valve (222), and the air-cooled brake resistor (240) according to the selected energy dissipating level.

12. The computer-implemented method according to claim 11, comprising obtaining (S11) the request for energy dissipation as a request comprising an average power to be dissipated during a time period.

13. The computer-implemented method according to claim 11 or 12, comprising obtaining (S12) the request for energy dissipation as a request comprising an average power to be dissipated during a travelled distance. _{[AP17]}

14. The computer-implemented method according to any of claims 11-13, comprising obtaining (S13) the request for energy dissipation as a request comprising an instantaneous power to be dissipated over a travelled distance. _{[AP18]}

15. The computer-implemented method according to any of claims 11-14, comprising configuring the fuel cell stack (225) in idle mode (S61) in case the third energy dissipating level of the FC system is not selected, and shutting down (S62) the fuel cell stack (225) in case the third energy dissipating level of the FC system is selected.

16. A computer program product comprising program code for performing, when executed by the processing circuitry, the method of any of claims 11-15.

17. A non-transitory computer-readable storage medium comprising instructions, which when executed by the processing circuitry, cause the processing circuitry to perform the method of any of claims 11-15.
